# EUROPÄISCHE PATENTSCHRIFT

(11) **EP 3 608 014 B1**
(45) Veröffentlichungstag und Bekanntmachung des Hinweises auf die Patenterteilung: **23.06.2021**
(21) Anmeldenummer: 19190467.1
(22) Anmeldetag: 07.08.2019
(51) Int. Cl.: B01F 7/04, B01F 7/00, B01F 15/00

(54) **THERMOKINETISCHER MISCHER ZUM SCHMELZMISCHEN VON KUNSTSTOFFABFALLPRODUKTEN**
THERMOKINETIC MIXER FOR MELT MIXING OF PLASTIC WASTE PRODUCTS
MÉLANGEUR THERMOCINÉTIQUE DESTINÉ AU MÉLANGE À L'ÉTAT FONDU DES PRODUITS DÉCHETS EN MATIÈRE PLASTIQUE

(30) Priorität: 07.08.2018 DE 102018119218
(43) Veröffentlichungstag der Anmeldung: 12.02.2020
(73) Patentinhaber: Pioonier GmbH, 32549 Bad Oeynhausen (DE)
(72) Erfinder: Dann, Reimund, 48231 Warendorf (DE); Huwe, Alexander, 61118 Bad Vilbel (DE)
(74) Vertreter: Meyer, Niels Thorben

(56) Entgegenhaltungen:
- EP-A1- 1 365 853
- JP-A- S51 147 058
- US-A- 2 283 008
- US-A- 5 932 159
- US-A1- 2007 177 451

## Beschreibung

Die Erfindung betrifft einen thermokinetischen Mischer zum Schmelzmischen von Kunststoffabfallprodukten mit einem eine Mischkammer umschließenden Gehäuse, einer die Mischkammer durchragenden und mit einer Antriebseinheit verbindbaren Welle und mit von der Welle im Wesentlichen radial abstehenden Mischschaufeln.

Mischer zum Mischen unterschiedlicher Baustoffe, wie zum Beispiel Mörtel oder Beton sind hinreichend bekannt. Um der hohen Beanspruchung des Milchgehäuses standzuhalten sind Mischer in der Regel aus Eisen oder Stahl gefertigt, dass eine hohe Verschleißbeständigkeit zumindest an seiner Oberfläche besitzt, um dem von der Reibung an abrasiven Mischgut herrührenden Verschleißtendenzen möglichst lange standzuhalten. Ein Mischer dieser Bauart ist aus der EP 0 241 723 A2 bekannt.

Aus der EP 0 976 442 A2 ist eine Mischvorrichtung mit einer Mischtrommel und einer an den Enden der Mischtrommel gelagerten Mischwelle bekannt. Die Mischwelle weist radial nach außen abstehende Schaufelarme auf, an deren Enden Schaufelblätter angeordnet sind. Die Schaufelblätter weisen einen Verschleißschutz in Form einer Hartauftragsschweißung aus einem verschleißfesten Material auf.

US 3,591,146 A beschreibt eine Befestigungsvorrichtung für eine Misch- und Knetmaschine mit einer rotierenden Schneckenwelle, bestehend aus einem koaxial am Gehäuse der Misch- und Knetmaschine befestigbaren Gehäuse und einer separaten, unabhängig angetriebenen, drehbaren Welle mit darin radial angeordneten Schaufeln.

Aus US 5 895 790 A ist ein thermokinetischer Mischer bekannt, der zum Schmelzmischen verwendet wird. Hierbei werden Polymermischungen und thermogehärtetes Abfallmaterial zu nutzbaren Produkten zurückverwandelt durch erstes Formen eines thermogehärteten Materials von voraussagbare Qualität aus ungleichartigen Polymeren und nachfolgendes Schmelzmischen des thermogehärteten Materials mit einem thermoplastischen Material zu nutzbaren Produkten.

EP 1 365 853 B1 beschreibt einen gattungsgemäßen Mischer, bei dem auf einer Welle Anbauten befestigt sind und die Anbauten derart an der Welle angeordnet sind, dass die in dem Mischer befindlichen Partikel bei der Rotation der Welle auf mehrere Anbauten prallen.

Nachteilig bei den aus dem Stand der Technik bekannten Mischern ist, dass die Teile der Mischer, insbesondere die Mischschaufeln aufwendig miteinander und der antreibenden Welle verbunden sind und hierdurch die Gestaltung der Teile beschränkt wird. Hierdurch ist die Auswahl der zu verwendeten Werkstoffe stark begrenzt.

US 2 283 008 A beschreibt einen Mischer zum Mischen von chemischen Substanzen, der eine rechteckige Welle umfasst, auf der keilförmige Mischschaufeln angebracht sind, wobei jeweils eine Welle mit Mischschaufeln in einem Trog angeordnet ist.

Der Erfindung liegt die Aufgabe zugrunde, die Haltbarkeit eines Mischers und dessen Wartung zu verbessern.

Die Aufgabe wird durch die in Anspruch 1 angegebene Erfindung gelöst. Vorteilhafte Ausgestaltungen der Erfindung sind in den Unteransprüchen angegeben.

Die Aufgabe wird erfindungsgemäß dadurch gelöst, dass zumindest ein in der Mischkammer verlaufender Abschnitt der Welle mehrkantig ausgestaltet ist und jeweils mindestens zwei Mischschaufeln diametral an einem hülsenförmigen und auf die Welle aufschiebbaren Mittelteil angeordnet sind, dessen Innenfläche passend zur Welle mehrkantig ausgestaltet ist, so dass es auf der Welle verdrehsicher gehalten ist, wobei jeweils ein Mittelteil und mindestens zwei Mischschaufeln einstückig ausgestaltet sind. Mithilfe des erfindungsgemäßen Mischers können Kunststoffabfallprodukte derart gemischt werden, dass diese anschmelzen und sich geleeartig verhalten, so dass aus den in den Mischer eingefüllten Kunststoffabfallprodukten eine Masse entsteht, die in nachfolgenden Bearbeitungsschritten zu neuen Produkten geformt werden kann. Der erfindungsgemäße Mischer bietet somit eine Form des Recyclings, bei der verschiedenartige Mischkunststoffe derart aufbereitet werden, dass aus ihnen neue Produkte hergestellt werden können. Die für das Anschmelzen der Kunststoffabfallprodukte notwendige Energie entsteht insbesondere dadurch, dass die Kunststoffabfallprodukte zum einen durch die Mischschaufeln geschert werden und zum anderen mit den Mischschaufeln, der Mischkammer und auch untereinander kollidieren, so dass kinetische Energie entsteht, die zur Erwärmung der Kunststoffabfallprodukte führt.

Nach der Erfindung sind mindestens zwei Mischschaufeln und ein diese tragendes Mittelteil einstückig gestaltet. Es sind keine aufwendigen Befestigungen der Mischschaufeln an einem mit der Welle verbundenen Basisteil mehr notwendig. Das Mittelteil mit den Mischschaufeln weist eine zur Außenfläche der Welle komplementär ausgestaltete Innenfläche auf, so dass das Mittelteil einfach auf die Welle gesteckt werden kann und verdrehsicher gehalten wird. Eine weitere radiale Sicherung des Mittelteils ist nicht zwingend notwendig. Bei den aus dem Stand der Technik bekannten thermokinetischen Mischer ist eine aufwendige Demontage notwendig, um beispielsweise Mischschaufeln auszuwechseln. Zum Austausch der Mittelteile bzw. der Mischschaufeln, kann die Welle demontiert und die Mittelteile ausgetauscht werden.

Die Anzahl der Mischschaufeln in der Mischkammer kann je nach Anwendung variiert werden. Das heißt, es kann vorgesehen sein, dass ein Mittelteil mehr als zwei Mischschaufeln aufweist, beispielsweise drei oder vier Mischschaufeln. Drei Mischschaufeln können vorzugsweise in einem Winkel von 45° und vier Mischschaufeln vorzugsweise in einem Winkel von 90° zueinander am Mittelteil angeordnet sein.

Um die Mittelteile axial zu sichern, kann es vorteilhaft sein, dass zwischen zwei Mittelteilen mindestens eine auf die Welle aufsteckbare Abstandshülse vorliegt, deren Innenfläche mehrkantig, insbesondere komplementär, das heißt bevorzugt passend oder kongruent zur Welle, bzw. deren Oberfläche ausgestaltet ist. Hierdurch wird die Abstandshülse verdrehsicher auf der Welle gehalten. Die Abstandshülse kann eine runde, ebene Oberfläche aufweisen und aus Kunststoff oder Metall bestehen. Insbesondere kann die Abstandshülse aus hartem Stahl, Hartguß, Hardox oder einer Kombination hieraus gefertigt sein. Je nach Bedarf kann die Anzahl der Abstandshülsen zwischen zwei Mittelteilen variiert werden, da durch die Anzahl der Abstandshülsen der Abstand zwischen den Mittelteilen verkleinert oder vergrößert werden kann. Die Abstandshülsen können in Breite und Stärke variiert werden, so dass sie an die jeweilige Anwendung anpassbar sind. In einer Ausgestaltung kann auch vorgesehen sein, dass zwischen zwei Mittelteilen keine Abstandshülse vorliegt. Bei dieser Ausgestaltung liegen die Mittelteile vorteilhaft aneinander und sorgen so für die notwendige axiale Sicherung. Es kann vorteilhaft sein, die Abstandshülsen mit einem Sicherungsring oder einer Klammer radial zu sichern.

In einer Ausgestaltung kann vorgesehen sein, dass Mittelteil und Mischschaufeln aus hartem Stahl, Hartguß, Hardox oder einer Kombination hieraus gefertigt sind. Dadurch, dass Mittelteil und mindestens zwei Mischschaufeln einstückig gefertigt sind, können diese aus einem hartem Material hergestellt sein. Hier hat sich insbesondere ein harter Stahl, Hartguß, Hardox oder einer Kombination hieraus als vorteilhaft erwiesen. Es hat sich gezeigt, dass der Abrieb erheblich vermindert wird und die Wartungsintervalle verlängert werden können.

Die Mischschaufeln sind quaderförmig ausgestaltet. Hierbei besitzen die Mischschaufeln eine große Grundfläche, die das Mischen fördert. Die quaderförmigen Mischschaufeln können schräge Ecken, Seitenflächen oder Grundflächen aufweisen.

Die quaderförmigen Mischschaufeln sind derart in der Mischkammer angeordnet, dass deren Grundflächen in einer zur Welle queraxial ausgerichteten Ebene liegen. Hierdurch liegen die Mischschaufeln insbesondere in Ebenen, die parallel zueinander sind. Es kann jedoch auch bevorzugt sein, wenn lediglich ein Teil der Mischschaufeln derart in der Mischkammer angeordnet sind, dass deren Grundflächen in einer zur Welle queraxial ausgerichteten Ebene liegen. Andere Mischschaufeln, bzw. ein weiterer Teil der in der Mischkammer enthaltenen Mischschaufeln können, bzw. kann in anderer Art in der Mischkammer angeordnet sein.

Es ist bevorzugt, dass die Mittelteile derart auf der Welle angeordnet sind, dass die Mischschaufeln zweier benachbarter Mittelteile in einem Versatz von 90° zueinander angeordnet sind.

Die Mischkammer ist vorteilhafterweise zylinderförmig ausgestaltet und umfasst einen Mischtrog und einen Mischkammerdeckel. Um die Achse des Mischtrogs dreht sich insbesondere die Welle. Der Mischtrog, insbesondere die Innenfläche des Mischtrogs kann eine Beschichtung aufweisen, die ein Anheften des Mischguts mindert. Hierbei kann es sich beispielsweise um eine Kunststoff- oder Metallbeschichtung handeln. Der Mischtrog an sich und auch der Mischkammerdeckel sind vorzugsweise aus Metall gefertigt. Der Mischkammerdeckel kann über Flanschverbindungen an dem Mischtrog befestigt sein. Um die Handhabung des Mischkammerdeckels zu vereinfachen, können Haken oder Griffe vorgesehen sein.

An der Unterseite des Mischtrogs ist vorzugsweise eine öffenbare Klappe vorgesehen, durch die Mischgut abführbar ist. Die Klappe kann händisch oder automatisch öffenbar sein.

Das Gehäuse des Mischers umfasst vorteilhafterweise mindestens drei insbesondere mit Öffnungen für die Welle versehenen und axial hintereinander angeordnete Seitenwände, die im Wesentlichen parallel zueinander ausgerichtet sind und die an einer im Wesentlichen senkrecht zu diesen ausgerichteten Gehäusegrundplatte befestigbar sind. Es wird somit ein kompaktes Gehäuse bereitgestellt, welches aufgrund der Grundplatte eine leicht zu transportierende Einheit bildet.

Die erste und zweite Seitenwand des Gehäuses bilden vorteilhafterweise Seitenwände der Mischkammer. Es kann somit auf zusätzliche Seitenwände der Mischkammer verzichtet werden. Der Mischtrog der Mischkammer kann beispielsweise mittels Befestigungsmittel lösbar oder mittels Schweißen permanent an der ersten und zweiten Seitenwand befestigt werden.

Um Mischgut der Mischkammer zuzuführen kann der Mischkammer eine zylindrische Zuführkammer vorgeschaltet sein, deren Seitenwände von der zweiten und dritten Seitenwand des Gehäuses gebildet werden. In der Zuführkammer sind insbesondere Fördermittel vorhanden, die Mischgut aus der Zuführkammer durch eine Öffnung der zweiten Seitenwand in die Mischkammer fördern. Das Fördermittel kann beispielsweise ein Schneckenförderer, ein Wendelförderer oder eine Exzenterschneckenpumpe sein. Je nach Anwendung können verschiedene Fördermittel zum Einsatz kommen. Im Gegensatz zum Schneckenförderer fehlt bei dem Wendelförderer eine Schneckenwelle in der Mitte, was den Vorteil hat, dass die Wartung und Montage des Wendelförderers einfach ist. In der Ausgestaltung des Fördermittels als Exzenterschneckenpumpe kann der Mischtrog als Stator ausgebildet sein, in dem sich ein im Prinzip als Rundgewinde-Schraube ausgebildeter Rotor bewegt. Ein Vorteil der Exzenterschneckenpumpe ist, dass sie sich in Verbindung mit entsprechender Mess- und Regeltechnik sehr gut zur Dosierung des Mischguts einsetzen lässt.

Um der Zuführkammer Mischgut zuzuführen, kann die Zuführkammer auf ihrer Oberseite eine Öffnung aufweisen. Die Öffnung kann trichterförmig gestaltet sein. Ein auf die Öffnung anbringbares Verschlussmittel, wie beispielsweise ein Deckel, verhindert das Eindringen von unerwünschtem Material in die Zuführkammer.

Es ist bevorzugt, die erste und die zweite oder die dritte Seitenwand jeweils ein Lager zur Lagerung der Welle aufweisen. Dadurch, dass der Abstand zwischen den Lagern gering ist, werden unerwünschte Schwingungen der Welle reduziert. Außerdem sind die Lager für Wartungsarbeiten gut zugänglich. Bei den Lagern kann es sich um bei dem Fachmann bekannte Wellenlager handeln, beispielsweise Wälzlager oder Gleitlager.

Die Erfindung wird nachfolgend anhand eines Ausführungsbeispiels der Erfindung näher erläutert, das in der Zeichnung dargestellt ist. Es zeigen
- Figur 1: eine perspektivische Ansicht einer bevorzugten Ausgestaltung eines Mischers,
- Figur 2: eine perspektivische Ansicht einer Welle,
- Figur 3: eine perspektivische Ansicht von auf eine Welle aufgesteckte Mittelteile und Fördermittel,
- Figur 4: eine perspektivische Ansicht zweier Mittelteile mit Abstandshülse und
- Figur 5: eine weitere perspektivische Ansicht zweier Mittelteile mit Abstandshülse.

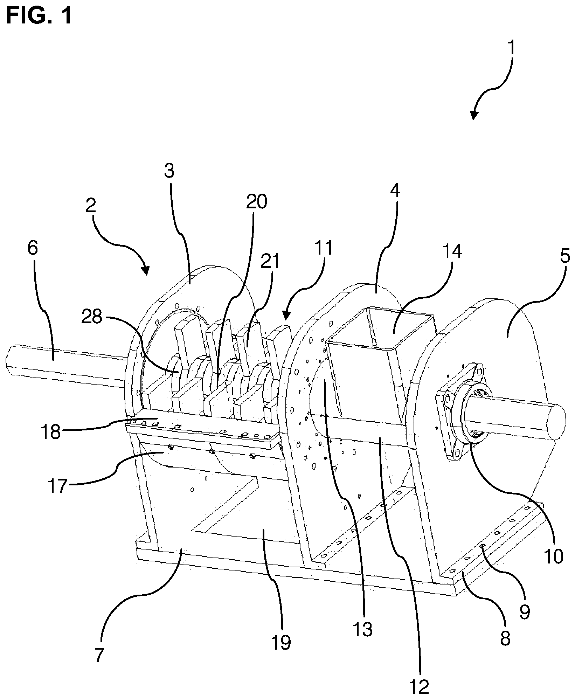

In Figur 1 ist eine perspektivische Ansicht einer bevorzugten Ausgestaltung eines Mischers gezeigt. Der Mischer 1 ist als thermokinetischer Mischer 1 ausgestaltet. Das Gehäuse 2 des Mischers 1 weist drei parallel zueinander ausgerichtete und hintereinander angeordnete Seitenwände 3, 4, 5 auf, die jeweils eine Öffnung für eine die Seitenwände 3, 4, 5 durchragende Welle 6 besitzen. Die Seitenwände 3, 4, 5 sind auf einer Grundplatte 7 befestigt, so dass der Mischer 1 in kompakter Form transportabel ist. Zur Befestigung an der Grundplatte 7 weisen die Seitenwände 3, 4, 5 einen Flansch 8 mit Bohrungen 9 auf, die eine Verschraubung mit der Grundplatte 7 ermöglichen.

Die Welle 6 ist mehrkantig, zum Beispiel vier-, sechs- oder achtkantig ausgestaltet und kann über eine nicht dargestellte Antriebseinheit angetrieben werden. Die Welle 6 kann mit der Antriebseinheit beispielsweise über eine Wellenkupplung wirkverbunden sein. Als Antrieb kann ein Getriebemotor in Fuß-, Flansch- oder Aufsteckbauform verwendet werden. Auch die Verwendung eines elektrohydraulischen Antriebes oder eines reinen Elektromotors ist möglich.

Die Welle 6 ist über in den Öffnungen der ersten Seitenwand 3 und dritten Seitenwand 5 eingepasste Lager 10 gesichert. Aufgrund der kurzen Bauweise und des geringen Lagerabstands können Schwingungen der Welle 6 minimiert werden und es wird eine hohe Biegesteifigkeit erreicht. Je nach Ausgestaltung können die Lager 10 auch in den Öffnungen der ersten Seitenwand 3 und zweiten Seitenwand 4 angeordnet sein, so dass sich der Lagerabstand nochmals verkürzt, was sich positiv auf die Biegesteifigkeit der Welle 6 auswirkt.

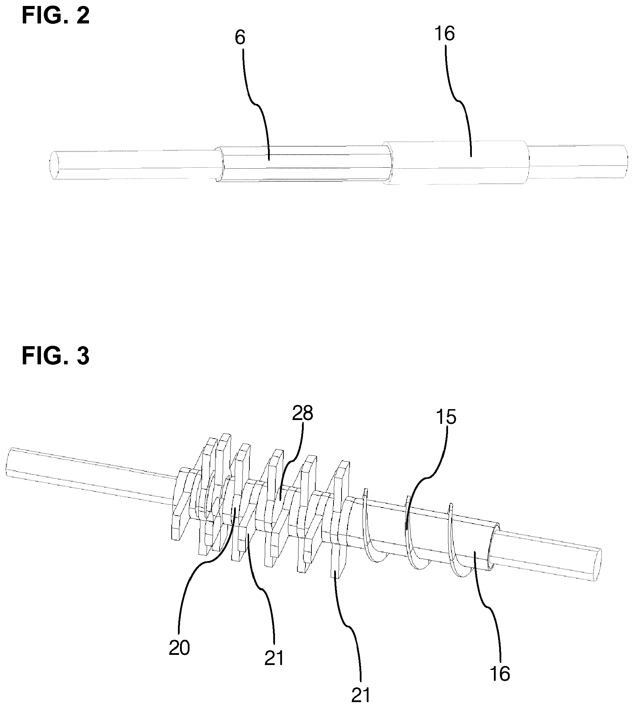

Die erste Seitenwand 3 und zweite Seitenwand 4 des Gehäuses 2 formen gleichzeitig Seitenwände einer Mischkammer 11 und die zweite Seitenwand 4 und dritte Seitenwand 5 formen gleichzeitig Seitenwände einer Zuführkammer 12. Die Zuführkammer 12 ist zylindrisch ausgestaltet und weist auf der Oberseite 13 eine schachtförmige Öffnung 14 auf, über die Mischgut in die Zuführkammer 12 eingebracht werden kann. Die Zuführkammer 12 kann horizontal angeordnet sein, wobei die Zuführkammer 12 auch geneigt sein kann. Die Zuführkammer 12 kann je nach Förderleistung unterschiedliche Baugrößen aufweisen und beispielsweise aus Edelstahl hergestellt sein. Zur Förderung des Mischguts liegt in der Zuführkammer 12 ein Fördermittel vor. Hierbei kann es sich um einen Schneckenförderer 15 handeln, der exemplarisch in Figur 3 dargestellt ist. Der in der Zuführkammer 12 verlaufende Schneckenförderer 15 kann ein mit der Welle 6 fest verbundenes Schneckengewinde aufweisen. Das Schneckengewinde kann mit der Welle 6 verschweißt, mit ihr über Stege verbunden oder in einem Teil mit der Welle 6 hergestellt sein. Alternativ kann der Schneckenförderer 15 auf einer Hülse 16 befestigt sein, die wiederum auf die Welle 6 aufsteckbar ist. Die Hülse 16 kann wiederum mittels Schrauben oder anderweitig mit der Welle 6 verbunden sein. Hierbei kann die Innenfläche der Hülse 16 kongruent zur Außenkontur der Welle 6 mehrkantig sein, so dass die Hülse verdrehsicher auf der Welle gehalten wird. Es kann jedoch auch vorgesehen sein, dass ein Wellenabschnitt in der Zuführkammer 12 rund ausgestaltet ist und die somit mit einer runden Innenfläche versehene Hülse 16 mit dem Schneckenförderer 15 zum Beispiel mittels einer Passfeder oder anderweitig auf der Welle 6 gesichert wird. Anstelle eines Schneckenförderers 15 kann auch ein Wendelförderer ohne Welle genutzt werden. Bei dieser Ausgestaltung wären die Lager 10 der Welle 6 in der ersten Seitenwand 3 und der zweiten Seitenwand 4 zu integrieren. Das Schneckengewinde kann als Vollblattschnecke mit einem fortlaufenden Gewinde, als Bandgewinde oder Paddelschnecke ausgeführt sein.

Das Mischgut wird aus der Zuführkammer 12 durch die Öffnung in der zweiten Seitenwand 4 in die, der Zuführkammer 12 nachgeschalteten Mischkammer 11 gefördert.

Die Mischkammer 11 ist zylinderförmig ausgestaltet und umfasst einen Mischtrog 17 und einen nicht dargestellten Mischkammerdeckel, die über eine Flanschverbindung 18 miteinander befestigt werden. Die Mischkammer 11 kann auch einteilig ausgestaltet sein, wobei dann eine mit einem Verschlussmittel verschließbare Öffnung in der Oberseite der Mischkammer 11 vorgesehen sein kann, damit die Mischkammer 11 zugänglich ist. In dem Mischtrog 17 ist eine nicht dargestellte Öffnung integriert, die oberhalb einer Öffnung 19 in der Grundplatte 7 liegt und die mit einem Verschlussmittel, zum Beispiel einem Deckel verschließbar ist. Das Öffnen und Schließen der Öffnung in dem Mischtrog 17 kann automatisch oder manuell erfolgen. Durch die Öffnung in dem Mischtrog 17 kann gemischtes Mischgut entfernt werden. In der Mischkammer 11 können Sensoren vorliegen, die beispielsweise die Temperatur des Mischguts bestimmen.

Die die Mischkammer 11 durchragende Welle 6 dreht sich vorzugsweise um die Achse der Mischkammer 11. Wie in Figur 1 und außerdem in Figur 2 gezeigt, ist die Welle 6 mehrkantig ausgestaltet und kann unterschiedliche Wellendurchmesser aufweisen. Beispielsweise kann ein Wellenabschnitt in der Zuführkammer 12 einen größeren Wellendurchmesser aufweisen als ein Wellenabschnitt in der Mischkammer 11.

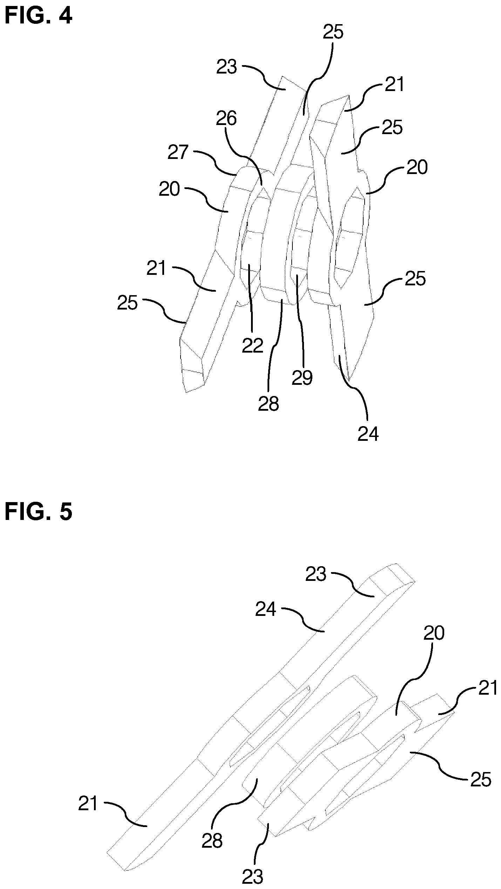

Wie in Figur 1 und Figur 4 zu sehen, sind auf die Welle 6 Mittelteile 20 aufgeschoben, die jeweils zwei Mischschaufeln 21 aufweisen, die sich radial von der Welle 6 in die Mischkammer 11 erstrecken. Die beiden Mischschaufeln 21 sind diametral am Mittelteil 20 angeordnet. Es kann vorgesehen sein, dass mehr als zwei Mischschaufeln 21 am Mittelteil 20 angeordnet sind. Ein Mittelteil 20 und zumindest zwei Mischschaufeln 21 sind einstückig gefertigt und bestehen beispielsweise aus Hardox. Dadurch, dass das Mittelteil 20 und jeweils mindestens zwei Mischschaufeln 21 aus einem Stück bestehen, sind keine Befestigungsmittel notwendig, um die Mischschaufeln 21 an dem Mittelteil 20 zu befestigen. Das Mittelteil 20 ist hülsenförmig ausgestaltet und weist eine Innenfläche 22 auf, die an die Kontur der Welle 6 angepasst ist. Das heißt, die Innenfläche 22 des Mittelteils 20 ist passend zur Kontur der Welle 6 mehrkantig ausgestaltet. Hierdurch kann das Mittelteil 20 auf die Welle 6 geschoben und verdrehsicher gehalten werden, so dass eine radiale Sicherung gegeben ist. Eine Sicherung des Mittelteils 20 durch Befestigungsmittel auf der Welle 6 ist nicht notwendig. Die Außenkontur des Mittelteils 20 kann mehrkantig oder glatt gestaltet sein.

Die Mischschaufeln 21 sind quaderförmig ausgestaltet und können schräge Seitenflächen 23 aufweisen, wie beispielsweise in Figur 4 zu sehen ist. Vorteilhafterweise sind die Längsseiten 24 der quaderförmigen Mischschaufeln 21 in einem Winkel von circa 45° abgeschrägt. Die Mischschaufeln 21 können in einer weiteren Gestaltung gerade Seitenflächen 23 aufweisen, die keine Schräge aufweisen, wie beispielhaft in Figur 5 gezeigt ist. Es kann jedoch auch vorteilhaft sein, wenn die Mischkammer 11 eine Kombination von verschiedenen Mischschaufeln 21 umfasst, wobei ein Teil der Mischschaufeln 21 schräge Seitenflächen 23 und ein weiterer Teil der Mischschaufeln 21 gerade Seitenflächen 23 aufweisen.

Die Grundflächen 25 einer Mischschaufel 21 liegen bevorzugt in einer zur Welle 6 queraxial ausgerichteten Ebene. Hierfür bilden die Grundflächen 25 zweier Mischschaufeln 21 eine Ebene mit einer Oberseite 26 bzw. Unterseite 27 eines Mittelteils 20. Es kann jedoch auch vorteilhaft sein, wenn die Grundflächen 25 zweier Mischschaufeln 21 zu der Oberseite 26 bzw. Unterseite 27 des Mittelteils 20 geneigt sind.

Zwischen den Mittelteilen 20 sind, wie in Figur 1 und 3 zu erkennen, Abstandshülsen 28 angeordnet. In einer Ausgestaltung ist jeweils eine Abstandshülse 28 zwischen zwei Mittelteilen 20 angeordnet. Es kann jedoch auch vorgesehen sein, mehr als eine Abstandshülse 28 zwischen zwei Mittelteilen 20 anzuordnen, damit der Abstand der Mittelteile 20 zueinander vergrößert wird. Selbstverständlich ist es auch denkbar, auf die Abstandshülsen 28 vollständig oder teilweise zu verzichten, so dass bei Bedarf auch Mittelteil 20 an Mittelteil 20 auf der Welle 6 angeordnet sein kann. Die Abstandshülse 28 weist eine Innenfläche 29 auf, die an die Außenkontur der Welle 6 angepasst ist, also mehrkantig ausgestaltet ist, so dass die Abstandshülse 28 einfach auf die Welle 6 aufschiebbar ist.

Wie in Figur 1 und Figur 3 dargestellt, sind die Mittelteile 20 derart auf der Welle 6 angeordnet, dass die Mischschaufeln 21 zweier benachbarter Mittelteile 20 in einem Versatz von 90° zueinander angeordnet sind. Hierdurch entstehen in der Mischkammer 11 beispielsweise vier Reihen von hintereinander angeordneten Mischschaufeln 21, die in einem Winkel von 90° zueinander stehen. In dem dargestellten Ausführungsbeispiel stehen sich also die Mischschaufeln 21 von jedem dritten Mittelteil 20 gegenüber. Um zu verhindern, dass die sich drehenden Mischschaufeln 21 an den Seitenwänden 3, 4 reiben, ist jeweils am Ende der in der Mischkammer 11 aufgereihten Mittelteile 20 eine Abstandshülse 28 angeordnet. Für die Ausgestaltung, dass das Fördermittel, zum Beispiel ein Schneckenförderer 15 auf einer Hülse 16 befestigt ist, die wiederum auf die Welle 6 geschoben wird, wie schemenhaft in Figur 3 gezeigt, können sich die Abstandshülsen 28 und die Mittelteile 20 mit den Mischschaufeln 21 an die Hülse 16 oder einen in Figur 2 gezeigten Wellenabsatz anlegen. Die Hülse 16 kann mittels Befestigungsmittel an der Welle reversibel befestigt sein. Eine weitere axiale Sicherung der auf die Welle 6 aufgeschobenen Mittelteile 20 und Abstandshülse 28 könnte durch ein Lager 10, ein Spannring, ein Absatz in der Seitenwand 3 oder ein sonstiges Sicherungsmittel erreicht werden, so dass die auf die mehrkantige Welle 6 aufgeschobenen Mittelteile 20 und Abstandshülsen 28 auf der Seite der Welle 6 axial gesichert sind, das der Hülse 16 entgegengesetzt ist. Beispielsweise könnte sich eine weitere Abstandshülse 28 oder ein sonstiges Sicherungsmittel an einen Wellenabsatz legen, der dadurch entsteht, dass der Wellenabschnitt vor dem Abschnitt, auf den die Mittelteile 20 und Abstandshülsen 28 aufgeschoben werden und der sich in der Mischkammer 11 befindet, einen kleineren Wellendurchmesser aufweist.

Der Mischer 1 wird als thermokinetischer Mischer 1 genutzt. Es können im Wesentlichen jegliche Kunststoffabfallprodukte, umfassend beispielsweise Mischkunststoffe, Polymermischungen, thermoplastische Kunststoffe und thermogehärtete Abfallstoffe verwendet werden. Nach dem Schmelzmischen durch den Mischer kann die Masse aus dem Mischer abgeführt und in weiteren Schritten zu nutzbaren Produkten verarbeitet werden. Die Kunststoffteile werden durch die Öffnung 14 der Zuführkammer 12 in die Zuführkammer 12 eingebracht. Die eingebrachten Kunststoffteile werden von dem Schneckenförderer 15 in die Mischkammer 11 gefördert. Die Rotationsgeschwindigkeit der Welle 6 kann variieren von unterhalb von 1500 Umdrehungen pro Minute bis über 4000 Umdrehungen pro Minute. Die Wahl der Wellenrotationsgeschwindigkeit hängt von den verwendeten Kunststoffteilen und Prozessparametern ab.

Aufgrund der sich schnell drehenden Welle 6 und folglich der Mischschaufeln 21 erfolgt eine Durchmischung und Zerkleinerung der Kunststoffteile. Zum einen erfahren die Kunststoffteile durch die sich mit der Welle 6 schnell drehenden Mischschaufeln 21 eine Scherung. Zum anderen kommt es zu Kollisionen zwischen Kunststoffteilen und zwischen Kunststoffteilen und den Mischschaufeln 21 und zwischen Kunststoffteilen und der Innenwand der Mischkammer 11. Dies führt zur Erwärmung und zum Anschmelzen der Kunststoffteile, so dass eine Schmelzmischung der Kunststoffteile entsteht. Je nach eingebrachten Kunststoffteilen werden die Prozessparameter derart gewählt, dass nach einer definierten Prozesszeit oder bei Erreichen einer definierten Temperatur der Prozess gestoppt wird. Das schmelzgemischte Mischgut kann über die an der Unterseite des Mischtrogs 17 angeordnete und als Auslassöffnung ausgestaltete Öffnung aus der Mischkammer 11 entfernt werden. Da das Mischgut in einem zähflüssigen Zustand ist, ist ein Abfließen des Mischguts über die Öffnung möglich. Das Entfernen des Mischguts aus der Mischkammer 11 kann in dem laufenden Betrieb, das heißt bei Drehung der Welle 6 durchgeführt werden, wobei es vorteilhaft ist, die Rotationsgeschwindigkeit zu reduzieren. Gleichzeitig kann neues Mischgut aus der Zuführkammer 12 mithilfe des Fördermittels der Mischkammer 11 zugeführt werden.

## Patentansprüche

1. Thermokinetischer Mischer (1) zum Schmelzmischen von Kunststoffabfallprodukten mit einem eine Mischkammer (11) umschließenden Gehäuse (2), einer die Mischkammer (11) durchragenden und mit einer Antriebseinheit verbindbaren Welle (6) und mit von der Welle (6) im Wesentlichen radial abstehenden Mischschaufeln (21), **dadurch gekennzeichnet, dass** zumindest ein in der Mischkammer (11) verlaufende Abschnitt der Welle (6) mehrkantig ausgestaltet ist und jeweils mindestens zwei Mischschaufeln (21) diametral an einem hülsenförmigen und auf die Welle (6) aufschiebbaren Mittelteil (20) angeordnet sind, dessen Innenfläche (22) passend zur Welle (6) mehrkantig ausgestaltet ist, so dass es auf der Welle (6) verdrehsicher gehalten ist, wobei jeweils ein Mittelteil (20) und mindestens zwei Mischschaufeln (21) einstückig ausgestaltet sind und wobei die Mischschaufeln (21) quaderförmig ausgestaltet und derart in der Mischkammer angeordnet sind, dass deren Grundflächen in zur Welle (6) queraxial ausgerichteten Ebenen liegen, so dass die Grundflächen der Mischschaufeln (21) im Wesentlichen parallel zueinander sind.

2. Thermokinetischer Mischer (1) nach Anspruch 1, **dadurch gekennzeichnet, dass** zwischen zwei Mittelteilen (20) mindestens eine auf die Welle (6) aufsteckbare Abstandshülse (28) vorliegt, deren Innenfläche (29) mehrkantig ausgestaltet ist.

3. Thermokinetischer Mischer (1) nach Anspruch 1 oder 2, **dadurch gekennzeichnet, dass** Mittelteil (20) und Mischschaufeln (21) aus hartem Stahl, Hartguß, Hardox oder einer Kombination hieraus gefertigt sind.

4. Thermokinetischer Mischer (1) nach einem der vorhergehenden Ansprüche, **dadurch gekennzeichnet, dass** die Mittelteile (20) derart auf der Welle (6) angeordnet sind, dass die Mischschaufeln (21) zweier benachbarter Mittelteile (20) in einem Versatz von 90° zueinander angeordnet sind.

5. Thermokinetischer Mischer (1) nach einem der vorhergehenden Ansprüche, **dadurch gekennzeichnet, dass** die Mischkammer (11) zylinderförmig ist und einen Mischtrog (17) und einen Mischkammerdeckel umfasst.

6. Thermokinetischer Mischer (1) nach Anspruch 5, **dadurch gekennzeichnet, dass** der Mischtrog (17) eine öffenbare Klappe aufweist, durch die Mischgut abführbar ist.

7. Thermokinetischer Mischer (1) nach einem der vorhergehenden Ansprüche, **dadurch gekennzeichnet, dass** das Gehäuse (2) mindestens drei axial hintereinander angeordnete Seitenwände (3, 4, 5) umfasst, die im Wesentlichen parallel zueinander ausgerichtet sind und die an einer im Wesentlichen senkrecht zu diesen ausgerichteten Gehäusegrundplatte (7) befestigbar sind.

8. Thermokinetischer Mischer (1) nach Anspruch 7, **dadurch gekennzeichnet, dass** die erste Seitenwand (3) und die zweite Seitenwand (4) Seitenwände der Mischkammer (11) bilden.

9. Thermokinetischer Mischer (1) nach Anspruch 7 oder 8, **dadurch gekennzeichnet, dass** der Mischkammer (11) eine zylindrische Zuführkammer (12) vorgeschaltet ist, deren Seitenwände von der zweiten Seitenwand (4) und der dritten Seitenwand (5) des Gehäuses (2) gebildet sind.

10. Thermokinetischer Mischer (1) nach Anspruch 9, **dadurch gekennzeichnet, dass** die Zuführkammer (12) auf ihrer Oberseite (13) eine Öffnung (14) zur Zuführung von Mischgut aufweist.

11. Thermokinetischer Mischer (1) nach Anspruch 7, **dadurch gekennzeichnet, dass** die erste Seitenwand (3) und die zweite oder dritte Seitenwand (4, 5) jeweils ein Lager (10) zur Lagerung der Welle (6) aufweisen.

## Claims

1. Thermokinetic mixer (1) for melt mixing plastics waste products, comprising a housing (2) that surrounds a mixing chamber (11), a shaft (6) that protrudes through the mixing chamber (11) and can be connected to a drive unit, and comprising mixing blades (21) that project substantially radially from the shaft (6), **characterised in that** at least one portion of the shaft (6) that extends in the mixing chamber (11) is polygonal and in each case at least two mixing blades (21) are arranged diametrically on a sleeve-shaped central part (20) which can be pushed onto the shaft (6), the inner surface (22) of which central part is polygonal so as to match the shaft (6) such that it is non-rotatably held on the shaft (6), with in each case one central part (20) and at least two mixing blades (21) being designed as one piece and the mixing blades (21) being cuboid and being arranged in the mixing chamber in such a way that their base surfaces lie in planes aligned transversely axially to the shaft (6), such that the base surfaces of the mixing blades (21) are substantially parallel to one another.

2. Thermokinetic mixer (1) according to claim 1, **characterised in that** at least one spacer sleeve (28) which can be fitted onto the shaft (6) is provided between two central parts (20), the inner surface (29) of which spacer sleeve is polygonal.

3. Thermokinetic mixer (1) according to either claim 1 or claim 2, **characterised in that** the central part (20) and mixing blades (21) are made from hard steel, chilled cast iron, Hardox or a combination thereof.

4. Thermokinetic mixer (1) according to any of the preceding claims, **characterised in that** the central parts (20) are arranged on the shaft (6) in such a way that the mixing blades (21) of two adjacent central parts (20) are arranged so as to be offset by 90° from one another.

5. Thermokinetic mixer (1) according to any of the preceding claims, **characterised in that** the mixing chamber (11) is cylindrical and comprises a mixing trough (17) and a mixing chamber cover.

6. Thermokinetic mixer (1) according to claim 5, **characterised in that** the mixing trough (17) has an openable flap through which the mix material can be discharged.

7. Thermokinetic mixer (1) according to any of the preceding claims, **characterised in that** the housing (2) comprises at least three side walls (3, 4, 5) arranged axially one behind the other, which walls are aligned substantially parallel to one another and can be fastened to a housing base plate (7) aligned substantially perpendicularly to said walls.

8. Thermokinetic mixer (1) according to claim 7, **characterised in that** the first side wall (3) and the second side wall (4) form side walls of the mixing chamber (11).

9. Thermokinetic mixer (1) according to either claim 7 or claim 8, **characterised in that** a cylindrical feed chamber (12) is arranged upstream of the mixing chamber (11), the side walls of which feed chamber are formed by the second side wall (4) and the third side wall (5) of the housing (2).

10. Thermokinetic mixer (1) according to claim 9, **characterised in that** the feed chamber (12) has an opening (14) on its upper side (13) for feeding in mix material.

11. Thermokinetic mixer (1) according to claim 7, **characterised in that** the first side wall (3) and the second or third side wall (4, 5) each have a bearing (10) for supporting the shaft (6).

## Revendications

1. Mélangeur thermocinétique (1) pour mélanger à l'état fondu des déchets de matières plastiques, comprenant un carter (2) entourant une chambre de mélange (11), un arbre (6) s'étendant à travers la chambre de mélange (11) et pouvant être relié à une unité d'entraînement, et des pales de mélange (21) saillant sensiblement radialement de l'arbre (6), **caractérisé en ce qu'**au moins une section de l'arbre (6) s'étendant dans la chambre de mélange (11) est de forme polygonale et au moins deux pales de mélange (21) sont disposées diamétralement sur une partie centrale (20) en forme de manchon qui peut être enfilée sur l'arbre (6) et dont la surface intérieure (22) est de forme polygonale adaptée à l'arbre (6), de sorte qu'elle est maintenue sur l'arbre (6) de manière à ne pas pouvoir tourner, une partie centrale (20) et au moins deux pales de mélange (21) étant réalisées d'une seule pièce, et les pales de mélange (21) étant de forme parallélépipédique et étant disposées dans la chambre de mélange de telle sorte que leurs surfaces de base se trouvent dans des plans orientés transversalement à l'axe de l'arbre (6), de sorte que les surfaces de base des pales de mélange (21) sont sensiblement parallèles entre elles.

2. Mélangeur thermocinétique (1) selon la revendication 1, **caractérisé en ce qu'**entre deux parties centrales (20) se trouve au moins un manchon d'écartement (28) qui peut être enfilé sur l'arbre (6) et dont la surface intérieure (29) est de forme polygonale.

3. Mélangeur thermocinétique (1) selon la revendication 1 ou 2, **caractérisé en ce que** la partie centrale (20) et les pales de mélange (21) sont fabriquées en acier dur, en fonte dure, en Hardox, ou en une combinaison de ceux-ci.

4. Mélangeur thermocinétique (1) selon l'une des revendications précédentes, **caractérisé en ce que** les parties centrales (20) sont disposées sur l'arbre (6) de telle sorte que les pales de mélange (21) de deux parties centrales (20) adjacentes sont disposées avec un décalage de 90° entre elles.

5. Mélangeur thermocinétique (1) selon l'une des revendications précédentes, **caractérisé en ce que** la chambre de mélange (11) est cylindrique et comprend une cuve de mélange (17) et un couvercle de chambre de mélange.

6. Mélangeur thermocinétique (1) selon la revendication 5, **caractérisé en ce que** la cuve de mélange (17) est munie d'un volet ouvrable à travers lequel la matière mélangée peut être déchargée.

7. Mélangeur thermocinétique (1) selon l'une des revendications précédentes, **caractérisé en ce que** le carter (2) comprend au moins trois parois latérales (3, 4, 5) disposées axialement l'une derrière l'autre, orientées sensiblement parallèlement entre elles et qui peuvent être fixées à une plaque de base (7) du carter orientée sensiblement perpendiculairement à celles-ci.

8. Mélangeur thermocinétique (1) selon la revendication 7, **caractérisé en ce que** la première paroi latérale (3) et la deuxième paroi latérale (4) forment des parois latérales de la chambre de mélange (11).

9. Mélangeur thermocinétique (1) selon la revendication 7 ou 8, **caractérisé en ce que** la chambre de mélange (11) est précédée d'une chambre d'alimentation (12) cylindrique dont les parois latérales sont formées par la deuxième paroi latérale (4) et la troisième paroi latérale (5) du carter (2).

10. Mélangeur thermocinétique (1) selon la revendication 9, **caractérisé en ce que** la chambre d'alimentation (12) est munie sur son côté supérieur (13) d'une ouverture (14) pour l'alimentation en matériau de mélange.

11. Mélangeur thermocinétique (1) selon la revendication 7, **caractérisé en ce que** la première paroi latérale (3) et la deuxième ou la troisième paroi latérale (4, 5) son munies chacune d'un palier (10) pour supporter l'arbre (6).
